# EUROPÄISCHE PATENTSCHRIFT

(11) **EP 4 140 871 B1**
(45) Veröffentlichungstag und Bekanntmachung des Hinweises auf die Patenterteilung: **04.06.2025**
(21) Anmeldenummer: 22192074.7
(22) Anmeldetag: 25.08.2022
(51) Int. Cl.: B62K 25/08, B62J 50/21

(54) **GABEL FÜR EIN FAHRRAD UND FAHRRAD**
FORK FOR A BICYCLE AND BICYCLE
FOURCHE POUR UNE BICYCLETTE ET BICYCLETTE

(30) Priorität: 26.08.2021 DE 102021209397
(43) Veröffentlichungstag der Anmeldung: 01.03.2023
(73) Patentinhaber: ZF Friedrichshafen AG, 88046 Friedrichshafen (DE)
(72) Erfinder: Schneider, Martin, 72574 Bad Urach (DE); Neumann, Finn Benjamin, 89134 Blaustein (DE); Lauhoff, Jakob, 72070 Tübingen (DE)

(56) Entgegenhaltungen:
- EP-A2- 2 703 686
- DE-A1- 102020 133 547

## Beschreibung

Die vorliegende Erfindung betrifft eine Gabel für ein Fahrrad und ein Fahrrad.

Fahrräder sind häufig mit einer luftgefederten Gabel ausgestattet, um z. B. Stöße, die durch das Fahren auf unebener Strecke in das Fahrrad eingetragen werden, abzufedern, damit ein Fahrzeugnutzer ein komfortables Fahrerlebnis hat. Allerdings fahren viele Nutzer mit einer falsch abgestimmten Federgabel und schöpfen dadurch das Potential der Federung nicht aus.

Aus DE 10 2018 003 262 A1 ist eine Fahrradfederungskomponente und eine Analysevorrichtung bekannt. Mittels der Analysevorrichtung kann ein Luftdruck der Federungskomponente überwacht werden.

Die gattungsgemäße DE 10 2020 133 547 A1 zeigt eine elektronische Überwachungsvorrichtung für eine Aufhängungskomponente eines Fahrrads. Die elektronische Überwachungsvorrichtung enthält ein Gehäuse, das eine Kammer begrenzt. Das Gehäuse ist mit der Aufhängungskomponente zu koppeln. Die elektronische Überwachungsvorrichtung enthält eine Schaltplatine, die in der Kammer angeordnet ist, sowie einen Sensor, der mit der Schaltplatine elektrisch verbunden ist. Der Sensor dient zum Messen einer Eigenschaft der Aufhängungskomponente. Die elektronische Überwachungsvorrichtung enthält auch einen Batteriehalter, der mit der Schaltplatine verbunden ist.

EP 2 703 686 A2 betrifft eine Federgabel für Fahrrad. Eine solche Federgabel umfasst ein Steuerrohr und ein damit verbundenes Rohrsystem, welches ein Standrohr und ein relativ dazu bewegliches und teleskopierbares Tauchrohr umfasst. Neben dem Rohrsystem ist ein Radaufnahmeraum vorgesehen. Wenn die Federgabel zwei parallel benachbarte Rohrsysteme aufweist, befindet sich der Radaufnahmeraum zwischen den Rohrsystemen.

Der vorliegenden Erfindung liegt ausgehend vom Stand der Technik die Aufgabe zu Grunde, eine verbesserte Gabel für ein Fahrrad vorzuschlagen, welche dem Fahrradnutzer das Abstimmen derselben erleichtert.

Die vorliegende Erfindung schlägt ausgehend von der vorgenannten Aufgabe eine Gabel für ein Fahrrad mit den Merkmalen nach Anspruch 1 und ein Fahrrad mit den Merkmalen nach Anspruch 5 vor. Weitere vorteilhafte Ausgestaltungen und Weiterbildungen gehen aus den Unteransprüchen hervor.

Eine Gabel für ein Fahrrad weist eine Luftfedereinrichtung auf, wobei die Luftfedereinrichtung eine Druckluftkammer, einen Hohlraum und einen Luftkanal aufweist. Der Luftkanal verbindet die Druckluftkammer mit dem Hohlraum fluidwirksam. Die Gabel weist ein Steuersystem auf, wobei das Steuersystem eine Steuereinrichtung und einen Luftdrucksensor aufweist. Der Luftdrucksensor ist signalwirksam mit der Steuereinrichtung verbunden. Das Steuersystem ist innerhalb des Hohlraums angeordnet.

Unter "Fahrrad" sind hierbei sämtliche Arten von Fahrrädern zu verstehen, beispielsweise Fahrräder mit elektrischer Antriebseinrichtung wie E-Bikes, Pedelecs, S-Pedelecs, Cargobikes, aber auch reguläre, mit Muskelkraft betriebene Fahrräder ohne elektrische Antriebseinrichtung. Mitunter sind auch Leichtkrafträder mit einer Maximalgeschwindigkeit von 45 km/h unter dem Begriff subsummiert.

Die Druckluftkammer der Luftfedereinrichtung wird mittels des Luftkanals fluidwirksam mit dem Hohlraum verbunden. Druckluftkammer, Hohlraum und Luftkanal sind luftgefüllt. "Fluidwirksam" bedeutet, dass Luft zwischen zwei Bereichen, hier zwischen der Druckluftkammer und dem Hohlraum, geführt ausgetauscht werden kann. Hier wird der Luftstrom mittels des Luftkanals geführt. Der Luftkanal weist hierbei lediglich zwei Öffnungen auf, eine erste Öffnung auf Seite der Druckluftkammer und eine zweite Öffnung auf Seite des Hohlraums. Durch diese fluidwirksame Verbindung ist der Luftdruck, der innerhalb der Druckluftkammer vorherrscht, ebenso groß wie der Luftdruck, der innerhalb des Hohlraums vorherrscht.

Die Druckluftkammer der Luftfedereinrichtung ist hierbei derjenige Teil der Luftfedereinrichtung, der den Hauptteil der Federarbeit übernimmt. Die Druckluftkammer ist dazu aufgeteilt in zwei Teilbereiche, nämlich in eine Negativkammer und eine Positivkammer, wobei beide Teilbereiche voneinander getrennt werden mittels eines Kolbens, der innerhalb der Druckluftkammer beweglich gelagert ist. Die Positivkammer und die Negativkammer sind fluidwirksam miteinander verbunden. Der Kolben kann dabei entlang seiner Längsachse innerhalb der Druckluftkammer bewegt werden. Federt die Gabel ein, wird die Luft in der Positivkammer mittels des Kolbens komprimiert, in der Negativkammer hingegen wird die Luft mittels des Kolbens expandiert. Federt die Gabel aus, wird die Luft in der Positivkammer mittels des Kolbens expandiert, in der Negativkammer hingegen wird die Luft mittels des Kolbens komprimiert. Diese Funktionsweise entspricht der Funktionsweise einer herkömmlichen Luftfeder einer herkömmlichen Gabel eines Fahrrads. Der Hohlraum und der Luftkanal hingegen leisten nur einen äußerst geringen Beitrag zur Federarbeit.

Das Steuersystem weist die Steuereinrichtung auf. Die Steuereinrichtung ist vorzugsweise ausgebildet als ECU. Die Steuereinrichtung weist zudem eine Speichereinrichtung auf, in welcher Daten gespeichert werden können. Die Steuereinrichtung weist eine Strom-Schnittstelle auf, mittels welcher die Steuereinrichtung mit einer Stromversorgung verbunden werden kann, wobei die Stromversorgung kabelgebunden erfolgt. Über die Steuereinrichtung erfolgt eine Stromversorgung des Luftdrucksensors und ggf. weiterer Sensoren und Komponenten, die mit der Steuereinrichtung verbunden sind, z. B. einer Kommunikationseinrichtung.

Das Steuersystem weist zudem den Luftdrucksensor auf. Dieser ist dazu ausgeformt, einen Luftdruck innerhalb des Hohlraums und somit innerhalb der Druckluftkammer zu ermitteln. Der Luftdrucksensor ist mit der Steuereinrichtung signalwirksam verbunden. Eine signalwirksame Verbindung ist derart ausgeformt, dass ein Daten- und Signalaustausch zwischen zwei Komponenten erfolgen kann. Diese signalwirksame Verbindung kann kabellos oder kabelgebunden ausgebildet sein. Um die signalwirksame Verbindung herstellen zu können, weisen sowohl die Steuereinrichtung als auch der Luftdrucksensor je eine Schnittstelle auf. Der Luftdrucksensor ist als handelsüblicher Luftdrucksensor ausgebildet.

Die vom Luftdrucksensor ermittelten Luftdruck-Messwerte für die Druckluftkammer werden über die signalwirksame Verbindung an die Steuereinrichtung weitergeleitet und dort ausgewertet. Beispielsweise kann eine Druckdifferenz des Luftdrucks bestimmt werden, wenn der Luftdrucksensor einen ersten Luftdruck zu einem ersten Zeitpunkt und einen zweiten Luftdruck zu einem zweiten Zeitpunkt ermittelt. Mittels der Auswertung kann festgestellt werden, wie stark die Gabel eingefedert ist. In anderen Worten kann ein negativer Federweg ausgehend von den ermittelten Luftdruck-Messwerten ermittelt werden, beispielsweise ausgehend von einer Druckdifferenz.

Mittels der Steuereinrichtung kann zudem ausgewertet werden, ob der negative Federweg, welcher allein aus einem Körpergewicht eines Fahrradnutzers im Stillstand resultiert, innerhalb eines Federintervalls eines Gesamtfederwegs liegt, z. B. innerhalb des Intervalls [15%; 20%] des Gesamtfederwegs. Der Gesamtfederweg ist dabei definiert als derjenige Federweg den die Gabel einfedern kann, gemessen von keinem Einfedern zu einem maximalen Einfedern. Ist dies nicht der Fall, kann die Steuereinrichtung daraus schließen, dass der Luftdruck innerhalb der Druckluftkammer und somit innerhalb der Luftfedereinrichtung für das Körpergewicht des Fahrradnutzers ungünstig eingestellt ist. Die Steuereinrichtung erkennt in anderen Worten, dass eine Nachjustierung des Luftdrucks nötig ist, so dass dieser für das Körpergewicht des Fahrradnutzers passend ist.

Das Steuersystem ist innerhalb des Hohlraums angeordnet. Der Hohlraum ist somit derart ausgeformt, dass dieser das Steuersystem aufnehmen kann. Der Hohlraum ist innerhalb der Gabel angeordnet. Das heißt, dass der Hohlraum weitestgehend von Material umschlossen ist. Der Hohlraum weist nur eine Öffnung zum Luftkanal hin auf und ggf. eine Durchführungsöffnung für die Durchführung wenigstens eines Kabels z. B. zum Verbinden der Steuereinrichtung mit einer Stromversorgung, vorzugsweise mit der durch die elektrische Antriebseinrichtung bereitgestellten Stromversorgung.

Die Durchführungsöffnung, durch die das wenigstens eine Kabel geführt wird, ist vorzugsweise luftdicht abgedichtet.

Die Gabel weist erfindungsgemäß zwei Gabelbeine auf und zusätzlich eine Gabelkrone. Die Gabel kann dann beispielsweise als Single-Crown-Gabel oder als Dual-Crown-Gabel ausgeformt sein. Dabei ist die Druckluftkammer innerhalb eines ersten Gabelbeins angeordnet. Der Hohlraum hingegen ist innerhalb der Gabelkrone angeordnet. Der Luftkanal ist sowohl innerhalb der Gabelkrone als auch innerhalb des ersten Gabelbeins angeordnet. In anderen Worten ist der Luftkanal zweigeteilt ausgeformt, wobei beide Teile des Luftkanals fluidwirksam miteinander verbunden und nach Außen luftdicht abgedichtet sind. Innerhalb des zweiten Gabelbeins ist beispielsweise eine Dämpfereinrichtung, z. B. in Form einer Zugstufen- und/oder Druckstufendämpfung, angeordnet.

Alternativ weist die Gabel statt der Gabelkrone eine Gabelbrücke auf. Die Gabel kann dann beispielsweise als Single-Crown-Gabel oder als Dual-Crown-Gabel oder als Upside-Down-Gabel ausgeformt sein. Der Hohlraum ist innerhalb der wenigstens einen Gabelbrücke angeordnet. Der Luftkanal ist sowohl innerhalb der wenigstens einen Gabelbrücke als auch innerhalb des ersten Gabelbeins angeordnet. In anderen Worten ist der Luftkanal zweigeteilt ausgeformt, wobei beide Teile des Luftkanals fluidwirksam miteinander verbunden und nach Außen luftdicht abgedichtet sind. Innerhalb des zweiten Gabelbeins ist beispielsweise eine Dämpfereinrichtung, z. B. in Form einer Zugstufen- und/oder Druckstufendämpfung, angeordnet.

Durch die Anordnung des Steuersystems innerhalb des Hohlraums wird eine platzsparende Lösung geschaffen, bei der das Steuersystem in die Gabel integriert ist. Durch die Möglichkeit, das Steuersystem mit der Stromversorgung, die durch eine elektrische Antriebsvorrichtung des Fahrrads bereitgestellt wird, zu verbinden und dadurch die Versorgung des Steuersystems mit Strom zu gewährleisten, kann die Gabel in verschiedensten Fahrradarten eingesetzt werden. Es ist für den Fahrradnutzer nicht mehr nötig, ein separates System zur Ermittlung des Luftdrucks zu nutzen, welches umständlich an einem Rahmen des Fahrrads befestigt werden muss.

Nach einer weiterbildenden Ausführungsform weist das Steuersystem zusätzlich einen Beschleunigungssensor auf, welcher mit der Steuereinrichtung signalwirksam verbunden ist. Der Beschleunigungssensor dient dazu, eine Beschleunigung des Fahrrads zu ermitteln. Die somit ermittelten Beschleunigungs-Messwerte werden an die Steuereinrichtung weitergeleitet, welche die Auswertung dieser Beschleunigungs-Messwerte durchführt. Um die signalwirksame Verbindung herstellen zu können, weisen sowohl die Steuereinrichtung als auch der Beschleunigungssensor je eine Schnittstelle auf. Der Beschleunigungs-Sensor ist als handelsüblicher Beschleunigungssensor ausgebildet. Der Beschleunigungssensor ist vorzugsweise ebenfalls innerhalb des Hohlraums angeordnet.

Mittels der Beschleunigungs-Messwerte und der Luftdruck-Messwerte kann durch die Steuereinrichtung mittels einer Auswertung eindeutig festgestellt werden, wann das Fahrrad einen Bremsvorgang durchführt. Dies ist dann der Fall, wenn eine negative Beschleunigung sowie eine schnelle Luftdruckänderung und somit ein schnelles Einfedern gemeinsam auftreten.

Nach einer weiterbildenden Ausführungsform weist die Steuereinrichtung eine Kommunikations-Schnittstelle auf, mittels welcher die Steuereinrichtung mit einer Kommunikationseinrichtung verbindbar ist. Die Kommunikations-Schnittstelle kann beispielsweise als eine CAN-Schnittstelle oder als eine andere Bus-Schnittstelle ausgeformt sein. Die Verbindung ist vorzugsweise kabelgebunden ausgeformt.

Eine Kommunikationseinrichtung kann beispielsweise ausgeformt sein als eine Sende-Empfangs-Einheit, welche vorzugsweise mittels eines Funkstandards Daten und/oder Signale an ein externes System, z. B. an ein mobiles Endgerät eines Fahrradnutzers senden kann. Alternativ dazu kann die Kommunikationseinrichtung als eine Anzeigeeinrichtung ausgeformt sein, die fest an dem Fahrrad installiert ist, beispielsweise ein Display oder Touchscreen, über welchen Benachrichtigungen an den Fahrzeugnutzer ausgegeben werden können und ggf. Eingaben vom Fahrzeugnutzer vorgenommen werden können.

Vorzugsweise kann dem Fahrradnutzer mittels der Kommunikationseinrichtung kommuniziert werden, welcher Luftdruck in der Druckluftkammer vorherrscht. Zudem kann dem Fahrradnutzer mittels der Kommunikationseinrichtung kommuniziert werden, ob die ermittelte Druckdifferenz und der daraus resultierende negative Federweg innerhalb des Federintervalls des Gesamtfederwegs liegt, z. B. innerhalb des Intervalls [15%; 20%] des Gesamtfederwegs. Zusätzlich dazu kann dem Fahrradnutzer mittels der Kommunikationseinrichtung kommuniziert werden, ob eine Anpassung des Luftdrucks in der Druckluftkammer notwendig ist. Beispielsweise kann eine Aufforderung kommuniziert werden, den Luftdruck manuell nachzujustieren.

Nach einer nicht beanspruchten Ausführungsform weist die Gabel zwei Gabelbeine auf, wobei die Luftfedereinrichtung innerhalb eines ersten Gabelbeins angeordnet ist. Innerhalb des zweiten Gabelbeins ist beispielsweise eine Dämpfereinrichtung, z. B. in Form einer Zugstufen- und/oder Druckstufendämpfung, angeordnet. Die Gabel kann beispielsweise als Single-Crown-Gabel, als Dual-Crown-Gabel oder als Upside-Down-Gabel ausgeformt sein. Sowohl die Druckluftkammer als auch der Hohlraum sowie der Luftkanal sind innerhalb des ersten Gabelbeins angeordnet. Folglich ist auch das Steuersystem innerhalb des ersten Gabelbeins angeordnet.

Ein Fahrrad weist eine elektrische Antriebseinrichtung und eine Gabel auf, welche bereits in der vorherigen Beschreibung beschrieben worden ist. Das Steuersystem der Gabel ist verbunden mit der elektrischen Antriebseinrichtung. Genauer gesagt wird das Steuersystem der Gabel mit Strom versorgt, der durch die elektrische Antriebseinrichtung bereitgestellt wird. Das Fahrrad kann beispielsweise als E-Bike, Pedelec, S-Pedelec, Cargobike o. ä. ausgebildet sein.

Bei einem nicht beanspruchten Verfahren zum Überprüfen des Luftdrucks in der Druckluftkammer der Luftfedereinrichtung der Gabel des stillstehenden Fahrrads, wobei die Gabel und das Fahrrad bereits in der vorherigen Beschreibung beschrieben wurden, ermittelt der Luftdrucksensor in einem ersten Schritt einen Luftdruck innerhalb des Hohlraums, wobei der Hohlraum fluidwirksam mit der Druckluftkammer verbunden ist. Zu diesem Zeitpunkt steht das Fahrrad still. Ein Fahrradnutzer kann sich zu diesem Zeitpunkt auf dem Fahrrad befinden.

Ausgehend von dem ermittelten Luftdruck wird in einem zweiten Schritt der negative Federweg der Gabel ermittelt. In anderen Worten wird ermittelt, wie stark die Gabel eingefedert ist. Dies erfolgt beispielsweise über eine festgestellte Druckdifferenz aus zwei Luftdruck-Messwerten zu zwei unterschiedlichen Zeitpunkten. Alternativ kann der negative Federweg über eine Druckdifferenz aus einem Luftdruck-Messwert und einem in der Speichereinrichtung der Steuereinrichtung hinterlegtem Ruhe-Luftdruckwert ermittelt werden. Der Ruhe-Luftdruckwert bezeichnet dabei denjenigen Luftdruck, der ohne Belastung der Gabel werksseitig voreingestellt ist. Das Ermitteln des negativen Federwegs erfolgt mittels der Steuereinrichtung, die sich dazu z. B. eines Computerprogrammprodukts bedient.

In einem dritten Schritt wird ausgewertet, ob der negative Federweg innerhalb eines Federintervalls des Gesamtfederwegs liegt. Das Federintervall beträgt vorzugsweise [15%; 20%] des Gesamtfederwegs. Dies wurde bereits beschrieben.

In einem vierten Schritt wird eine Aufforderung zum Einstellen des Luftdrucks ausgegeben, wenn der negative Federweg außerhalb des Federintervalls liegt. Ist der negative Federweg beispielsweise kleiner als 15% des Gesamtfederwegs, ist die Federwirkung der Gabel zu gering für das jeweilige Körpergewicht des Fahrradnutzers. Ist der negative Federweg beispielsweise größer als 20% des Gesamtfederwegs, ist die Federwirkung der Gabel zu hoch für das jeweilige Körpergewicht des Fahrradnutzers. In beiden Fällen wird das Potential der Federung nicht ausgeschöpft und ein komfortables Fahren ist nicht möglich, da bei einer Fahrt mit dem Fahrrad Stöße entweder zu wenig oder zu stark abgefedert werden.

Die Aufforderung kann beispielsweise mittels einer Kommunikationseinrichtung, die bereits beschrieben wurde, an den Fahrradnutzer kommuniziert werden. Beispielsweise wird der Fahrradnutzer über eine Anzeigeeinrichtung am Fahrrad oder über sein mobiles Endgerät aufgefordert, den Luftdruck, der in der Luftfedereinrichtung vorherrscht, zu erhöhen oder zu verringern. Dieses Anpassen des Luftdrucks erfolgt manuell. Wenn der Luftdruck angepasst wurde, passt sich gleichzeitig die Dämpfung der Dämpfereinrichtung der Gabel automatisch an. Das eben beschriebene Verfahren kann wiederholt ablaufen, z. B., wenn das Fahrrad von verschiedenen Fahrradnutzern genutzt werden soll.

Anhand der im Folgenden erläuterten Figuren werden verschiedene Ausführungsbeispiele und Details der Erfindung näher beschrieben. Es zeigen:
- Fig. 1: eine schematische Darstellung eines Fahrrads mit einer Gabel nach einem Ausführungsbeispiel,
- Fig. 2: eine schematische Darstellung Schnittdarstellung der Gabel des Fahrrads aus Fig. 1,
- Fig. 3: eine schematische Übersichts-Darstellung der Gabel des Fahrrads aus Fig. 1,
- Fig. 4: eine schematische Darstellung eines nicht beanspruchten beispielhaften Verfahrens zum Überprüfen eines Luftdrucks, das durch das Fahrrad aus Fig. 1 ausgeführt wird.

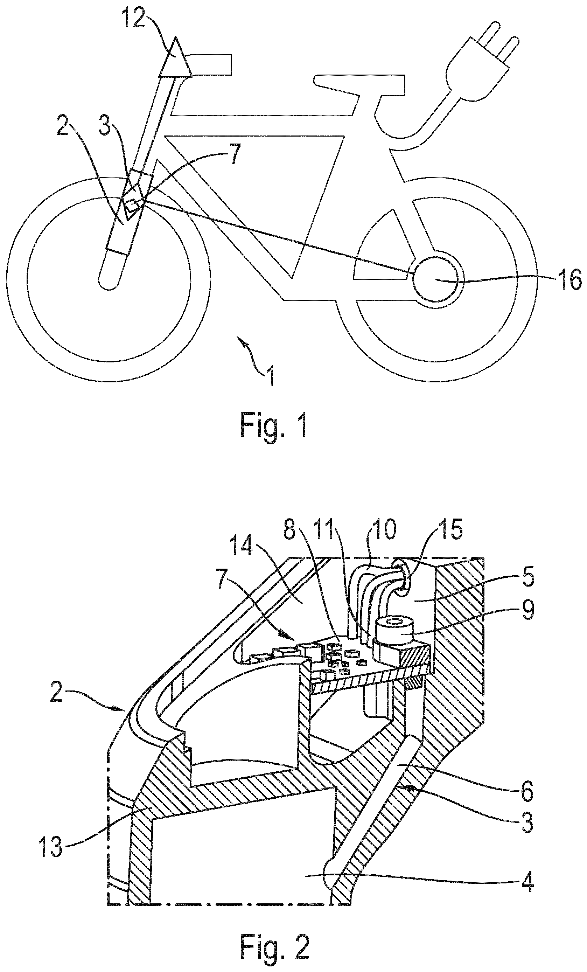

Fig. 1 zeigt schematische Darstellung eines Fahrrads 1 mit einer Gabel 2 nach einem Ausführungsbeispiel. Das Fahrrad 1 weist eine elektrische Antriebseinrichtung 16 auf, die hier nur schematisch dargestellt ist. Das Fahrrad 1 weist die Gabel 2 auf, die in Fig. 2 näher dargestellt ist und hier nur schematisch gezeigt ist. Die Gabel 2 weist eine Luftfedereinrichtung 3 und ein Steuersystem 7 auf, wobei das Steuersystem 7 innerhalb eines Hohlraums 5 der Luftfedereinrichtung 3 angeordnet ist. Das Steuersystem 7 ist mit der elektrischen Antriebseinrichtung 16 verbunden, so dass eine Versorgung des Steuersystems 7 mit Strom gewährleistet ist. Des Weiteren weist die Gabel 2 eine Dämpfereinrichtung auf, die hier nicht dargestellt ist.

Das Fahrrad 1 weist zudem eine Kommunikationseinrichtung 12 auf. Diese Kommunikationseinrichtung 12 ist z. B. in Form eines Touchscreens ausgebildet, der fest am Fahrrad 1 installiert ist. Über die Kommunikationseinrichtung 12 können Informationen an einen Fahrradnutzer kommuniziert werden. Alternativ kann die Kommunikationseinrichtung 12 als Sende-Empfangs-Einheit ausgebildet sein, die Daten mit einem mobilen Endgerät des Fahrradnutzers austauschen kann. Die Kommunikationseinrichtung 12 ist mit dem Steuersystem 7 signalwirksam verbunden.

Fig. 2 zeigt eine schematische Darstellung Schnittdarstellung der Gabel 2 des Fahrrads 1 aus Fig. 1. Es ist nur ein Teilbereich der Gabel 2 dargestellt. Die Gabel 2 weist die Luftfedereinrichtung 3 und das Steuersystem 7 auf. Die Luftfedereinrichtung 3 weist eine Druckluftkammer 4, einen Luftkanal 6 und den Hohlraum 5 auf. Die Druckluftkammer 4 ist mittels des Luftkanals 6 fluidwirksam mit dem Hohlraum 5 verbunden. Somit herrschen im Hohlraum 5 und in der Druckluftkammer 4 die gleichen Luftdruckverhältnisse. Die Druckluftkammer 4 ist in einem ersten Gabelbein 13 der Gabel 2 angeordnet. Der Hohlraum 5 ist in einer Gabelkrone 14 der Gabel 2 angeordnet. Die Luftfedereinrichtung 3 ist derart vom Material der Gabel 2 umgeben, dass kein unkontrollierter Luftaustausch mit einer Umgebung erfolgen kann. In anderen Worten sind sowohl die Druckluftkammer 4 als auch der Hohlraum 5 sowie der Luftkanal 6 luftdicht abgedichtet und nur miteinander fluidwirksam verbunden.

Das Steuersystem 7 weist die Steuereinrichtung 8 und den Luftdrucksensor 9 auf. Der Luftdrucksensor 9 ist signalwirksam mit der Steuereinrichtung 8 verbunden. Somit kann der Luftdrucksensor 9 die Luftdruckmesswerte, die für den Hohlraum 5 und somit auch für die Druckluftkammer 4 ermittelt werden, an die Steuereinrichtung 8 weiterleiten. Die Steuereinrichtung 8 kann die Luftdruckmesswerte auswerten.

Die Steuereinrichtung 8 weist eine Strom-Schnittstelle auf, über welche diese mit einer Stromversorgungsvorrichtung 10 verbunden ist. Die Stromversorgungsvorrichtung 10 ist mit der elektrischen Antriebseinrichtung 16 des Fahrrads 1 verbunden. Somit kann die Steuereinrichtung 8 mittels der Stromversorgungsvorrichtung 10 mit Strom versorgt werden. Um die Verbindung zwischen der Steuereinrichtung 8 und der elektrischen Antriebseinrichtung 16 zu bewerkstelligen, ist die Stromversorgungsvorrichtung 10 als eine kabelgebundene Verbindung ausgeformt. Die Durchführung des entsprechenden Kabels durch das Material der Gabel 2 ist mittels einer Abdichtung 15 luftdicht abgedichtet.

Die Steuereinrichtung 8 weist zudem eine Kommunikations-Schnittstelle 11 auf. Diese ist z. B. als eine CAN-Schnittstelle ausgeformt. Mittels einer kabelgebundenen Verbindung kann über die Kommunikations-Schnittstelle 11 eine signalwirksame Verbindung zwischen der Steuereinrichtung 8 und der Kommunikationseinrichtung 12 hergestellt werden. Die Durchführung des entsprechenden Kabels durch das Material der Gabel 2 ist mittels einer Abdichtung 15 luftdicht abgedichtet.

Das Steuersystem 7 mit seiner Steuereinrichtung 8 und seinem Luftdrucksensor 9 ist vollständig innerhalb des Hohlraums 5 angeordnet. Der Hohlraum 5 ist somit derart ausgeformt, dass dieser das Steuersystem 7 aufnehmen kann. Durch die Anordnung des Steuersystems 7 innerhalb des Hohlraums 5 wird eine platzsparende Lösung geschaffen.

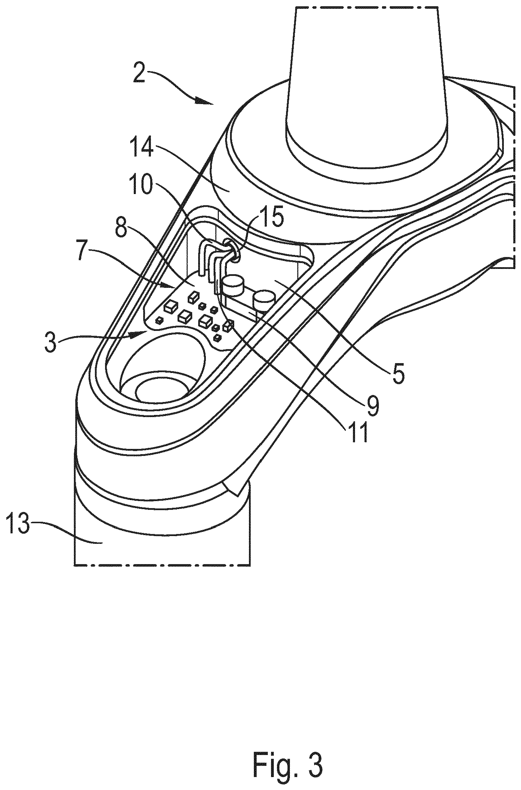

Fig. 3 zeigt eine schematische Übersichts-Darstellung der Gabel 2 des Fahrrads 1 aus Fig. 1. Dargestellt ist dieselbe Situation wie in Fig. 2, jedoch ist hier kein Schnitt durch die Gabel 2 dargestellt. Hier ist eine Ansicht gewählt, die einen Blick in die Gabelkrone 14, genauer auf das Steuersystem 7 im Hohlraum 5 der Gabelkrone 14 zulässt. Es ist deutlich zu erkennen, dass das Steuersystem 7 mit seiner Steuereinrichtung 8 und seinem Luftdrucksensor 9 vollständig innerhalb des Hohlraums 5 angeordnet ist.

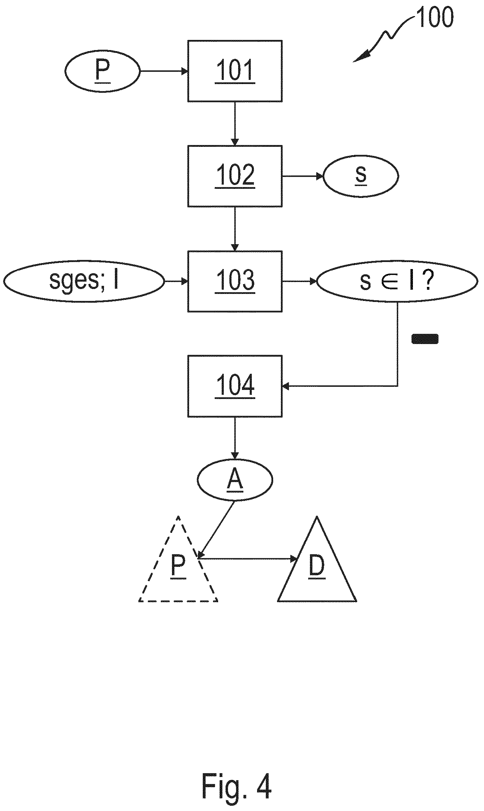

Fig. 4 zeigt eine schematische Darstellung eines nicht beanspruchten beispielhaften Verfahrens 100 zum Überprüfen eines Luftdrucks P, das durch das Fahrrad 1 aus Fig. 1 ausgeführt wird. Bei dem dargestellten Verfahren 100 wird der Luftdruck P in der Druckluftkammer 5 der Luftfedereinrichtung 3 der Gabel 2 des stillstehenden Fahrrads 1 überprüft.

In einem ersten Schritt 101 des Verfahrens 100 ermittelt der Luftdrucksensor 9 den Luftdruck P innerhalb des Hohlraums 5. Zu diesem Zeitpunkt steht das Fahrrad 1 still. Ein Fahrradnutzer befindet sich zu diesem Zeitpunkt auf dem Fahrrad 1.

Ausgehend von dem ermittelten Luftdruck P wird in einem zweiten Schritt 102 der negative Federweg s der Gabel 2 ermittelt. Das Ermitteln des negativen Federwegs s erfolgt mittels der Steuereinrichtung 8, die sich dazu beispielsweise eines Computerprogrammprodukts bedient.

In einem dritten Schritt 103 wird ausgewertet, ob der negative Federweg s innerhalb eines Federintervalls I des Gesamtfederwegs sges liegt. Diese Abfrage ist in Fig. 3 vereinfacht als Formel s E I dargestellt. Das Federintervall I beträgt [15%; 20%] des Gesamtfederwegs sges. Sowohl der Gesamtfederweg sges als auch das Federintervall I sind auf der Speichereinrichtung der Steuereinrichtung 8 gespeichert.

In einem vierten Schritt 104 wird eine Aufforderung A zum Einstellen des Luftdrucks P ausgegeben, wenn der negative Federweg s außerhalb des Federintervalls I liegt. Liegt der negative Federweg s innerhalb des Federintervalls I ergeht keine Aufforderung A. Die Aufforderung A wird mittels der Kommunikationseinrichtung 12 an den Fahrradnutzer kommuniziert. Der Fahrradnutzer wird z. B. über die Anzeigeeinrichtung am Fahrrad oder über sein mobiles Endgerät aufgefordert, den Luftdruck P zu erhöhen oder zu verringern. Zudem wird dem Fahrradnutzer angezeigt, um welchen Wert er den Luftdruck P verändern soll. Dieses Anpassen des Luftdrucks P erfolgt manuell. Wenn der Luftdruck P angepasst wurde, passt sich gleichzeitig die Dämpfung D der Dämpfereinrichtung der Gabel 2 automatisch an.

Die hier dargestellten Beispiele sind nur beispielhaft gewählt. Beispielsweise kann der Hohlraum statt in der Gabelkrone innerhalb einer Gabelbrücke angeordnet sein. Beispielsweise kann das Steuersystem zusätzlich einen Beschleunigungssensor aufweisen, der signalwirksam mit der Steuereinrichtung verbunden ist.

### Bezugszeichen

- 1: Fahrrad
- 2: Gabel
- 3: Luftfedereinrichtung
- 4: Druckluftkammer
- 5: Hohlraum
- 6: Luftkanal
- 7: Steuersystem
- 8: Steuereinrichtung
- 9: Luftdrucksensor
- 10: Stromversorgungsvorrichtung
- 11: Kommunikations-Schnittstelle
- 12: Kommunikationseinrichtung
- 13: Gabelbein
- 14: Gabelkrone
- 15: Abdichtung
- 16: elektrische Antriebseinrichtung

- 100: Verfahren
- 101: erster Schritt
- 102: zweiter Schritt
- 103: dritter Schritt
- 104: vierter Schritt

- A: Aufforderung
- D: Dämpfung
- I: Federintervall
- P: Luftdruck
- s: negativer Federweg
- sges: Gesamtfederweg

## Patentansprüche

1. Gabel (2) für ein Fahrrad (1), wobei die Gabel (2) eine Luftfedereinrichtung (3) aufweist, wobei die Luftfedereinrichtung (3) eine Druckluftkammer (4), einen Hohlraum (5) und einen Luftkanal (6) aufweist, wobei der Luftkanal (6) die Druckluftkammer (4) mit dem Hohlraum (5) fluidwirksam verbindet, wobei die Gabel (2) ein Steuersystem (7) aufweist, wobei das Steuersystem (7) eine Steuereinrichtung (8) und einen Luftdrucksensor (9) aufweist, wobei der Luftdrucksensor (9) signalwirksam mit der Steuereinrichtung (8) verbunden ist, wobei das Steuersystem (7) innerhalb des Hohlraums (5) angeordnet ist, wobei die Gabel (2) zwei Gabelbeine (13) aufweist, wobei die Druckluftkammer (4) innerhalb eines ersten Gabelbeins (13) angeordnet ist, **dadurch gekennzeichnet,**
- **dass** die Gabel (2) außerdem entweder eine Gabelkrone (14) aufweist, wobei der Hohlraum (5) innerhalb der Gabelkrone (14) angeordnet ist, und wobei der Luftkanal (6) sowohl innerhalb der Gabelkrone (14) als auch innerhalb des ersten Gabelbeins (13) angeordnet ist,
- oder dass die Gabel (2) außerdem wenigstens eine Gabelbrücke aufweist, wobei der Hohlraum (5) innerhalb der wenigstens einen Gabelbrücke angeordnet ist, und wobei der Luftkanal (6) sowohl innerhalb der wenigstens einen Gabelbrücke als auch innerhalb des ersten Gabelbeins (13) angeordnet ist.

2. Gabel (2) nach Anspruch 1, wobei das Steuersystem (7) zusätzlich einen Beschleunigungssensor aufweist, welcher mit der Steuereinrichtung (8) signalwirksam verbunden ist.

3. Gabel (2) nach Anspruch 2, wobei der Beschleunigungssensor innerhalb des Hohlraums (5) angeordnet ist.

4. Gabel (2) nach einem der vorherigen Ansprüche, wobei die Steuereinrichtung (8) eine Kommunikations-Schnittstelle (11) aufweist, mittels welcher die Steuereinrichtung (8) mit einer Kommunikationseinrichtung (12) verbindbar ist.

5. Fahrrad (1), aufweisend eine elektrische Antriebseinrichtung und eine Gabel (2) nach einem der vorherigen Ansprüche.

## Claims

1. Fork (2) for a bicycle (1), wherein the fork (2) has an air spring device (3), wherein the air spring device (3) has a compressed-air chamber (4), a cavity (5) and an air duct (6), wherein the air duct (6) fluidically connects the compressed-air chamber (4) to the cavity (5), wherein the fork (2) has a control system (7), wherein the control system (7) has a control device (8) and an air pressure sensor (9), wherein the air pressure sensor (9) is signal-transmittingly connected to the control device (8), wherein the control system (7) is arranged within the cavity (5), wherein the fork (2) has two fork legs (13), wherein the compressed-air chamber (4) is arranged within a first fork leg (13), **characterized**
- **in that** the fork (2) also has either a fork crown (14), wherein the cavity (5) is arranged within the fork crown (14), and wherein the air duct (6) is arranged both within the fork crown (14) and within the first fork leg (13),
- or in that the fork (2) also has at least one fork bridge, wherein the cavity (5) is arranged within the at least one fork bridge, and wherein the air duct (6) is arranged both within the at least one fork bridge and within the first fork leg (13).

2. Fork (2) according to Claim 1, wherein the control system (7) additionally has an acceleration sensor, which is signal-transmittingly connected to the control device (8).

3. Fork (2) according to Claim 2, wherein the acceleration sensor is arranged within the cavity (5).

4. Fork (2) according to any of the preceding claims, wherein the control device (8) has a communication interface (11), by means of which the control device (8) can be connected to a communication device (12).

5. Bicycle (1), comprising an electric drive device and a fork (2) according to any of the preceding claims.

## Revendications

1. Fourche (2) pour une bicyclette (1), la fourche (2) présentant un dispositif (3) de suspension pneumatique, le dispositif (3) de suspension pneumatique présentant une chambre (4) à air comprimé, un espace creux (5) et un canal d'air (6), le canal d'air (6) reliant de manière fluidique la chambre (4) à air comprimé à l'espace creux (5), la fourche (2) présentant un système de commande (7), le système de commande (7) comprenant un dispositif de commande (8) et un capteur de pression d'air (9), le capteur de pression d'air (9) étant relié au dispositif de commande (8) pour une transmission de signal, le système de commande (7) étant agencé à l'intérieur de l'espace creux (5), la fourche (2) comprenant deux branches (13) de fourche, la chambre (4) à air comprimé étant aménagée à l'intérieur d'une première branche (13) de fourche, **caractérisée**
- **en ce que** la fourche (2) comprend en outre une couronne de fourche (14), l'espace creux (5) étant aménagé à l'intérieur de la couronne de fourche (14), et le canal d'air (6) étant aménagé à la fois à l'intérieur de la couronne de fourche (14) et à l'intérieur de la première branche (13) de fourche,
- ou en ce que la fourche (2) comprenant en outre au moins un tablier de fourche, l'espace creux (5) étant aménagé à l'intérieur dudit au moins un tablier de fourche, et le canal d'air (6) étant aménagé à la fois à l'intérieur dudit au moins un tablier de fourche et à l'intérieur de la première branche (13) de fourche.

2. Fourche (2) selon la revendication 1, dans laquelle le système de commande (7) présente en outre un capteur d'accélération qui est relié au dispositif de commande (8) pour une transmission de signal.

3. Fourche (2) selon la revendication 2, dans laquelle le capteur d'accélération est agencé à l'intérieur de l'espace creux (5).

4. Fourche (2) selon l'une des revendications précédentes, dans laquelle le dispositif de commande (8) présente une interface de communication (11) au moyen de laquelle le dispositif de commande (8) est apte à être relié à un dispositif de communication (12).

5. Vélo (1), présentant un dispositif d'entraînement électrique et une fourche (2) selon l'une des revendications précédentes.
